# EUROPEAN PATENT SPECIFICATION

(11) **EP 1 051 708 B1**
(45) Date of publication and mention of the grant of the patent: **03.04.2002**
(21) Application number: 99901124.0
(22) Date of filing: 20.01.1999
(51) Int. Cl.: G11B 23/087

(54) **MAGNETIC TAPE CASSETTE**
MAGNETBANDKASSETTE
CASSETTE A BANDE MAGNETIQUE

(30) Priority: 20.01.1998 JP 910398
(43) Date of publication of application: 15.11.2000
(73) Proprietor: FUJI PHOTO FILM CO., LTD., Kanagawa-ken, 250-0193 (JP)
(72) Inventor: NISHIYAMA, Shigeru, Odawara-shi, Kanagawa 250-0001 (JP); NAKANE, Takanobu, Odarawa-shi, Kanagawa 250-0001 (JP); SHIGA, Hideaki, Odawara-shi, Kanagawa 250-0001 (JP)
(74) Representative: Grünecker, Kinkeldey, Stockmair & Schwanhäusser Anwaltssozietät
(86) International application number: JP9900195
(87) International publication number: WO9936916

(56) References cited:
- EP-A- 0 228 600
- EP-A- 0 323 199
- EP-A- 0 420 247
- FR-A- 2 644 278
- GB-A- 2 167 386
- GB-A- 2 223 479

## Description

### TECHNICAL FIELD

The present invention relates to a magnetic tape cassette, and more particularly to an improvement in a slider mounted on a lower half for protecting a magnetic tape.

### BACKGROUND ART

As is well known, in a magnetic tape cassette for a DDS, a DAT or the like, under the condition that both end portions of the strip-like magnetic tape are fixed, a pair of take-up hubs or take-up reels on which the magnetic tape is wound are accomodated in a case (which is a cassette body composed of an upper half and a lower half mated in a lid alignment manner) in which the magnetic tape is exposed only at a portion tensioned between these two hubs.

Since the high density recording is performed on the magnetic tape, in order to prevent the user's fingers from touching the magnetic tape or to prevent the dust from adhering thereto, it is necessary to enhance the sealing property of the case. For this reason, a front lid is provided on the upper half for covering a front side around which the above-described magnetic tape is exposed, and a slider is provided on the lower half for covering a bottom surface side.

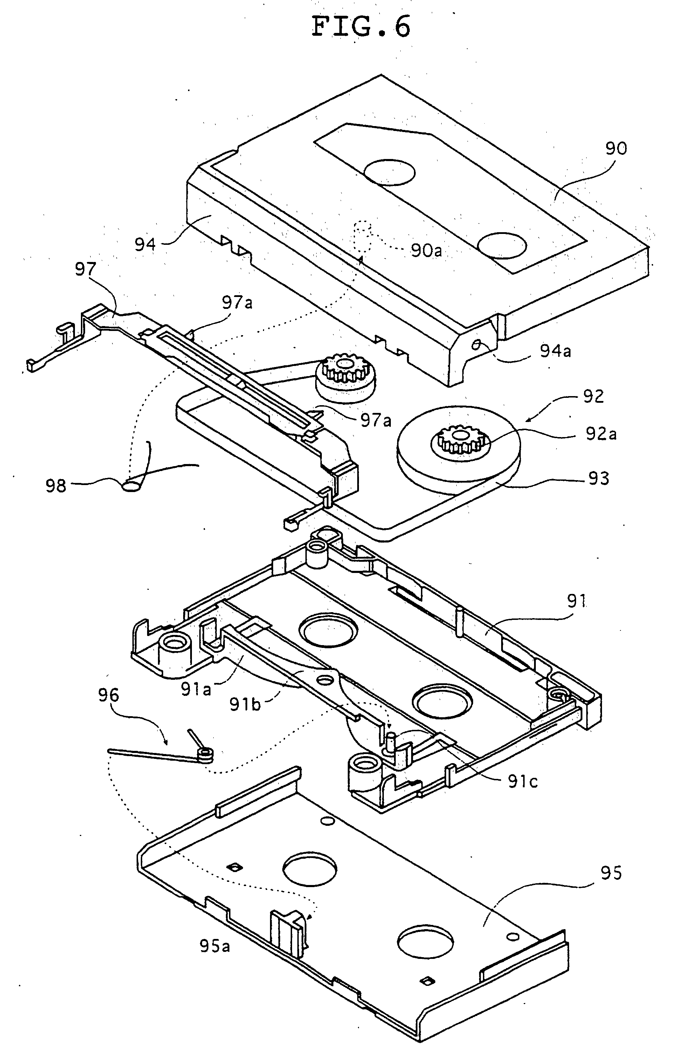

Fig. 6 is an exploded perspective view schematically showing a conventional magnetic tape cassette. The magnetic tape cassette is mainly composed of an upper half 90 and a lower half 91. A magnetic tape 93 wound around hubs 92 is received between the upper and lower halves. A front lid 94 for covering and protecting the magnetic tape when the cassette is not used is rotatably mounted around a pivot shafts 94a. Also, a slider 95 is mounted to be slidable back and forth on the outer lower surface of the lower half 91 in order to seal the open portion on the lower side of the case to enhance the sealability.

In order to prevent the magnetic tape 93, wound around the take-up hubs 92, from being loosened when the cassette tape is not used, a brake member 97 is provided on the upper half 90. Brake pieces 97a of the bake member 97 are engaged with gears 92a provided on the upper portions of the take-up hubs 92, thereby forbidding the rotation of the take-up hubs 92 to prevent the loosening of the magnetic tape 93. The brake member 97 is biased by a brake spring 98 to a position where the brake pieces 97a are engaged with the gears 92a when the cassette is not used. The brake spring 98 is retained around a protrusion 90a formed on the upper half 90.

Also, in the lower half 91, a wall-like member 91a curved in the form of a V-shape is provided along the magnetic tape 93 wound around the take-up hub 92. A triangular plate member 91b is mounted on its upper portion. This triangular plate member 91b has functions to enhance rigidity of the above-described wall-like member 91a and the casing body, to enhance sealing property within the case in corporation with ribs (not shown) of the upper half 90 to enhance the dust preventing effect, and further, to support the above-described brake spring 98 from below to prevent it from being dismounted, for example.

Further, a protrusion 91c is formed on the lower half 91, and a torsion coil spring 96 that is the biasing means for biasing the slider 95 forwardly is retained at the protrusion 91c. Furthermore, a rib 95a is formed on the slider 95 in an upright state for receiving the biasing force of the torsion coil spring 96 or inserting the above-described coil spring 96.

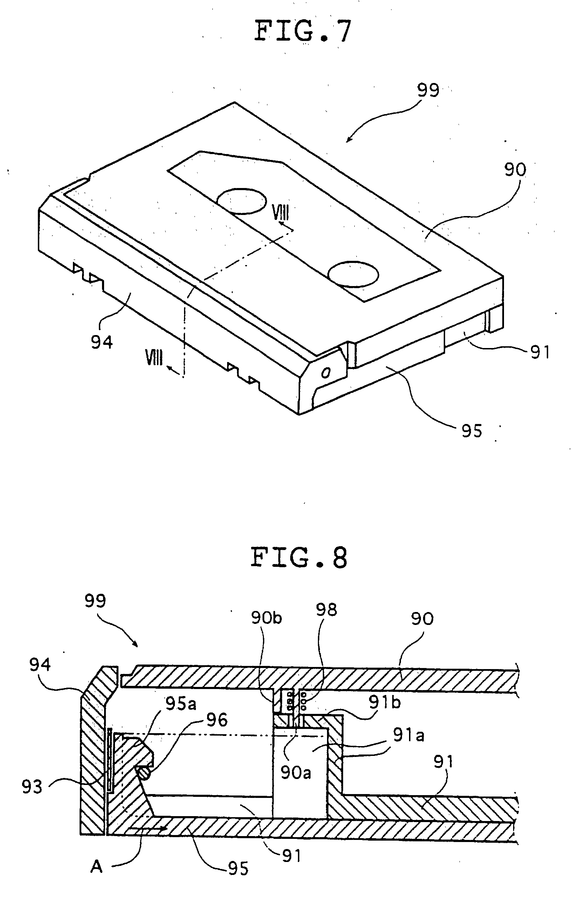

Fig. 7 shows a magnetic tape cassette 99 composed by assembling the upper half 90, the lower half 91 and the like shown in Fig. 6. Fig. 8 is a side elevation cross-sectional view of this magnetic tape cassette 99 taken along the line VIII-VIII. It should be however noted that some parts are omitted from Fig. 8.

In Fig. 8, the slider 95 is located at the front side and kept under the closed condition. When the magnetic tape cassette 99 is mounted on a deck (recording/reproducing system), the slider 95 is moved in a direction of an arrow A (rearwardly) in the figure by a mechanism of the system within the deck. Two-dot and dash lines in the figure indicate a locus of the slider 95.

A wall-like rib 90b provided on the right and left sides on an inner surface of the upper half 90 is used in cooperation with a triangular plate member 91b of the lower half 91 to thereby enhance the sealability for preventing the dust entrainment for the space in which the magnetic tape 93 wound around the take-up hubs 92 is housed.

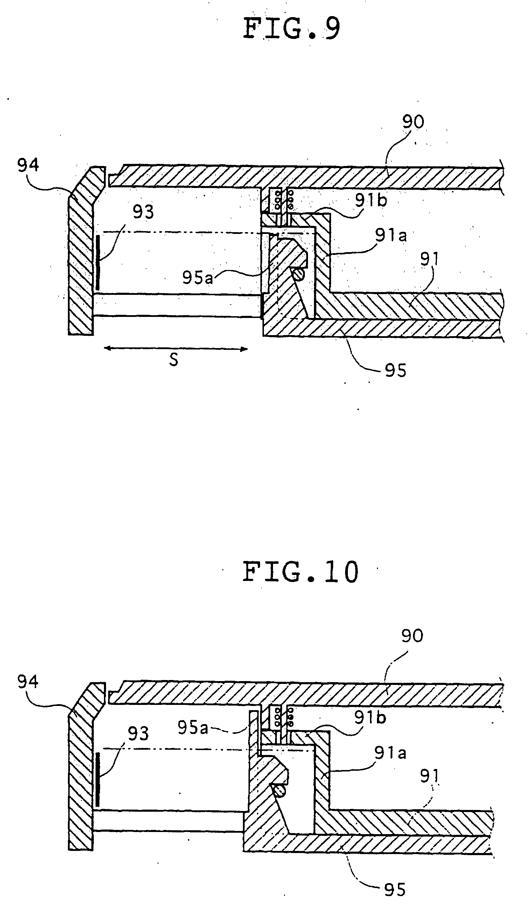

A height of the rib 95a of the slider 95 is set to be lower than a position of the triangular plate member 91b. When the magnetic tape cassette 99 is loaded on the deck and the slider 95 is moved, the slider 95 is moved to a position where the rib 95a is inserted below the triangular plate member 91b as shown in Fig. 9, thereby keeping a space S for the insertion of guides or the like for recording/reproducing.

However, if the rib 95a is kept at a lower level as in the conventional slider 95 shown in Fig. 8, the magnetic tape 93 rides over the rib 95a due to the generation of static electricity, the shock caused by the drop of the cassette or the like, so that the magnetic tape would be displaced on the inside of the rib 95a, which causes a serious breakdown.

In order to prevent this magnetic tape 93 from being displaced on the inside over the rib 95a, it is possible to consider a simple approach to increase the height of the rib 95a. However, only by simply increasing the height of the rib 95a, when the slider 95 is moved rearwardly, as shown in Fig. 10, the upper portion of the rib 95a comes into contact with the triangular member 91b so that the slider may not move any more. In this case, it is impossible to keep a sufficient space for the insertion of the guides or the like.

GB-A-2 223 479 discloses a magnetic tape cartridge comprising a T-shaped hub brake member or separate hub brake members extending from a rearwardly slidable slide which closes off the hub openings when the cartridge is not inserted in the player. The brake members engage teeth on the hubs and prevent tape-unwinding, when the cartridge is not inserted in a player.

In view of the above-noted defects inherent in the prior art, an object of the present invention is to provide a magnetic tape cassette which may prevent a magnetic tape from being displaced on the inside over a rib of a slider.

### DISCLOSURE OF THE INVENTION

In order to attain the above-noted object, according to the present invention, there is provided a magnetic tape cassette comprising: an upper half and a lower half constituting a cassette body for accomodating a pair of take-up hubs around which a magnetic tape is wound, said upper and lower halves being coupled with each other in a lid alignment manner so that only a part of the magnetic tape tensioned between said pair of take-up hubs is exposed; a pair of tape guides protruding vertically on a bottom surface on both right and left front ends of the lower half for guiding the part of the magnetic tape tensioned between said pair of take-up hubs to a front face of the cassette body; a slider in which a rib is formed in an upright manner on a front side which is on the back surface side of the part of the magnetic tape exposed from the cassette body between said pair of tape guide, said slider being mounted on an outer lower surface of said lower half to be slidable between a position where the slider covers the space on the back surface side of the magnetic tape and a position where the slider opens the space; and a front lid covering the front face of said cassette body from the front face side of the magnetic tape tensioned between said pair of tape guides and supported at its back surface side by the rib provided in an upright manner on said slider, characterized in that a height of at least a part of said rib is set to be higher than a height of said tape guides whereby the magnetic tape is prevented from riding over said rib and being displaced on the rear side.

Preferably, said rib has a height that is set to be higher than the height of said tape guides on each side at least adjacent to said pair of tape guides at both front ends of said lower half.

Preferably, said rib is provided substantially in the entire range on each side adjacent to said pair of tape guides at both front ends of said lower half.

Preferably, said rib has cutaway portions on both sides of its central portion, and has a height that is set to be higher than the height of said tape guides on each side at least adjacent to said pair of tape guides.

Preferably, a wall-like member in the form of a V-shape is provided in an upright manner along an outer circumference of the magnetic tape wound around said pair of take-up hubs on a front side of a bottom surface of said lower half and has its upper portion opened.

Preferably, a rib curved so as to come into contact with said wall-like member when the cassette is assembled is provided on the bottom surface of said upper half corresponding to said wall-like member in the form of the V-shape provided on the bottom surface of said lower half.

### BRIEF DESCRIPTION OF THE DRAWINGS

Fig. 1 is an exploded perspective view schematically showing a magnetic tape cassette according to the present invention.
Fig. 2 is an exploded perspective view showing a detail of an overturned upper half shown in Fig. 1.
Fig. 3 is a perspective view showing an outer appearance of the magnetic tape cassette composed of the upper half, the lower half, a slider and the like assembled and shown in Fig. 1.
Fig. 4 is a side-elevational cross-sectional view taken along the line IV-IV of Fig. 3.
Fig. 5 is a perspective view showing another example showing a slider in accordance with an embodiment.
Fig. 6 is an exploded perspective view schematically showing a conventional magnetic tape cassette.
Fig. 7 is a perspective view showing an outer appearance of the magnetic tape cassette composed of an upper half, a lower half, a slider and the like assembled and shown in Fig. 6.
Fig. 8 is a side-elevational cross-sectional view taken along the line VIII-VIII of Fig. 7.
Fig. 9 is a side elevational, cross-sectional view showing a condition in which the slider is moved rearwardly in Fig. 8.
Fig. 10 is a side elevational, cross-sectional view similar to Fig. 8 and showing a problem of the conventional one.

### BEST MODE FOR CARRYING OUT THE PRESENT INVENTION

A preferred embodiment shown in the attached drawings will now be described in detail with respect to a magnetic tape cassette according to the present invention.

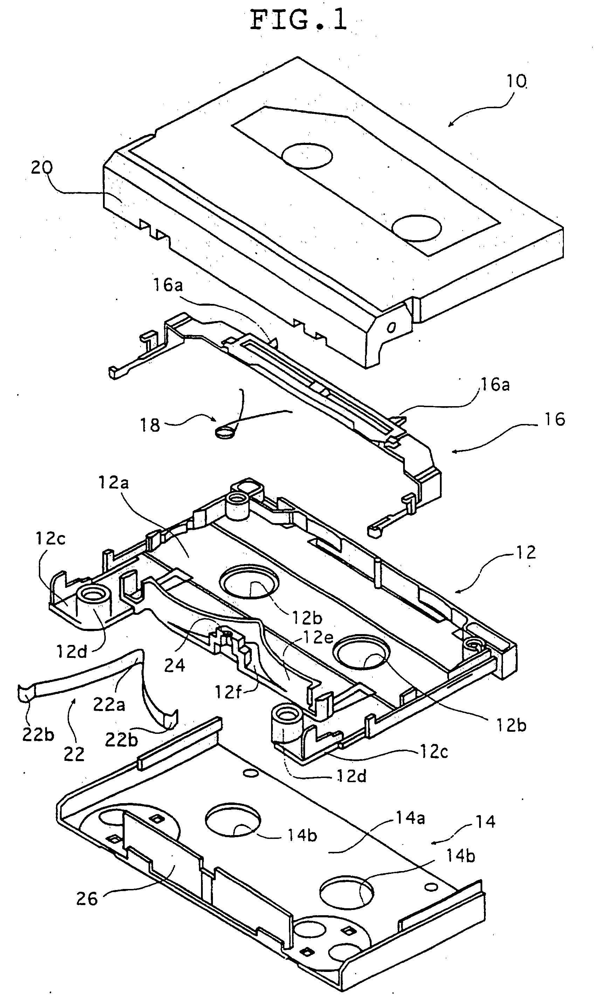

Fig. 1 is an exploded perspective view schematically showing a magnetic tape cassette according to the present invention. The magnetic tape cassette is mainly composed of an upper half 10 and a lower half 12 constituting a casing that becomes a case (cassette body) of a cassette mated in a lid alignment manner, and a slider 14 mounted slidably back and forth on an outer lower portion of the lower half 12.

A magnetic tape that is wound around a pair of take-up hubs (not shown) and is applied a tension, is received in the casing body composed of the upper half and the lower half. In no use of the cassette, in order to prevent the magnetic tape from being loosened by rotation of the take-up hub, the brake member 16 is provided in the upper half 10. The brake member 16 has two brake pieces 16a. These brake pieces 16a engage with the gears provided for the take-up hubs to thereby prohibit the rotation of the take-up hubs. In no use of the cassette, the brake member 16 is biased by the brake spring 18 using the torsion coil spring so that the above-described braking pieces 16a engage with the above-described gears.

Since the high density recording is effected on the magnetic tape, in particular, it is necessary to prevent the user's fingers from touching the magnetic tape or to prevent the dust from adhering thereto. For this reason, a front lid 20 is provided on the front side of the upper half 10 for protecting a part of the magnetic tape that is tensioned between a pair of take-up hubs when the cassette is not used.

The lower half 12 has reel shaft insertion holes 12b and 12b for insertion of the reel shafts into the cassette case when the cassette is used, and protrusions 12c and 12c extending forwardly from both the right and left ends of a bottom surface 12a. Cylindrical tape guides 12d and 12d for guiding to the case front surface a portion of the magnetic tape tensioned between the pair of take-up hubs are provided uprightly on the bottom surface. A space between the right and left protrusions 12c and 12c is a space into which a so-called tape loading system provided on the side of the deck on which the magnetic tape cassette is loaded is loaded.

The slider 14 is brought into contact from below to the lower surface 12a of the lower half 12 and slid back and forth of the cassette. When the slider is located on the front side, the space between the right and left protrusions 12c and 12c of the above-described lower half 12 and the reel shaft insertion holes 12b are closed by a bottom surface 14a of the slider for preventing the entrainment of the dust. Also, when the slider 14 is located on the rear side, the space between the right and left protrusions 12c and 12c is opened and at the same time, two holes 14b and 14b formed in the bottom surface 14a of the slider 14 are aligned with the above-described reel shaft insertion holes 12b and 12b.

When the cassette is loaded into the deck, the slider 14 automatically located on the rear side by the action of the mechanism within the deck. However, when the cassette is not used, the slider is located on the front side by a leaf spring 22 provided on the lower half 12.

A wall-like member 12e is formed in a V-shape by continuously disposing two ribs each shaped into a sleeve divided in half, and is provided vertically on the side (on the side in which the magnetic tape is exposed) facing the space between the above-described right and left protrusions 12c and 12c on the bottom surface 12a of the lower half 12. A V-shaped curved portion of this wall-like member 12e is formed along a shape of the tape in the case where the magnetic tape wound around the take-up ribs is located in place. Then, a rib 24 is provided in an upright manner like a post in a triangular middle of the portion 12f of the bottom which is defined by the wall-like member 12e.

An apex portion 22a of the V-shaped leaf spring 22 is inserted in between this post-like rib 24 portions of the above-described wall-like member 12e so that it is possible to readily insert the leaf spring 22 from above of the lower half 12. Furthermore, at this time since the bottom surface 12f of the lower half 12 is below the leaf spring 22, the leaf spring 22 is not brought into direct contact with the lower surface 14a of the slider 14, and even if the slider 14 slides, there is no fear that the leaf spring 22 damages the slider 14. Incidentally, it is preferable that this leaf spring 22 is made of precipitation hard steel such as SUS 631 having a Vickers hardness (Hv) of 540 or more, for example.

Also, the slider 14 is biased to be fixed to the front position by the leaf spring 22 when the cassette is not used. A vertical wall-like rib 26 is provided on the front side of the bottom surface 14a in order to receive the biasing force of this leaf spring 22. In the present embodiment, a height of this wall-like rib 26 is set to be higher than that of the tape guides 12d. This will be described later.

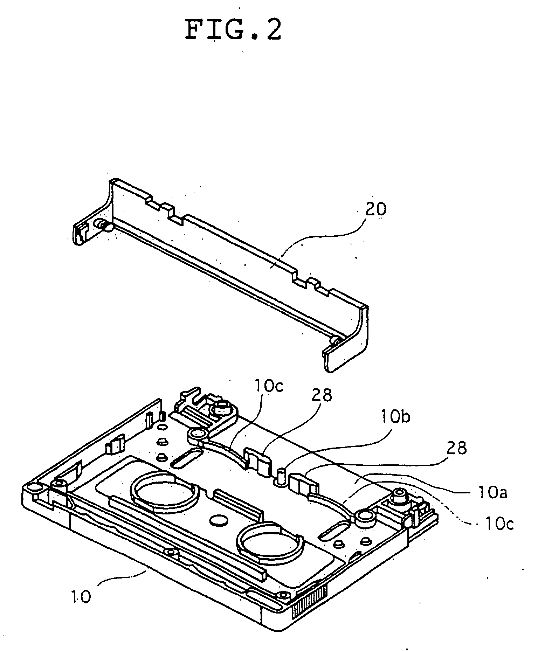

Fig. 2 shows a detail of the upper half 10. Fig. 2 is a perspective view showing the upper half 10 shown in Fig. 1, which is overturned. In the drawing, a side beyond the position where the front lid 20 is located is the front side. When the upper half 10 and the lower half 12 are mated with each other, a protrusion 10b for retaining the brake spring 18 is provided at a position of the bottom surface 10a of the upper half 10 corresponding to the position of the rib 24 of the lower half 12. Wall-like ribs 28 and 28 are provided in an upright manner on both sides of the protrusion.

When the upper half 10 and the lower half 12 are coupled with each other, the ribs 28 and 28 are located on both sides of the rib 24 of the lower half 12 and serves to depress the leaf spring 22 from above to prevent it from being pulled apart in the case where the leaf spring 22 is lifted upwardly.

Also, ribs 10c and 10c corresponding to a curvature of the wall-like member 12e of the lower half 12 are provided on both sides of the ribs 28 and 28 in the upper half 10. The ribs 10c and 10c is brought into contact with the wall-like member 12e to serve to enhance rigidity of the case when the upper half 10 and the lower half 12 are coupled with each other. Namely, even if the conventional triangular plate member is dispensed with, it is possible to keep the sufficient rigidity with these ribs 10c and 10c.

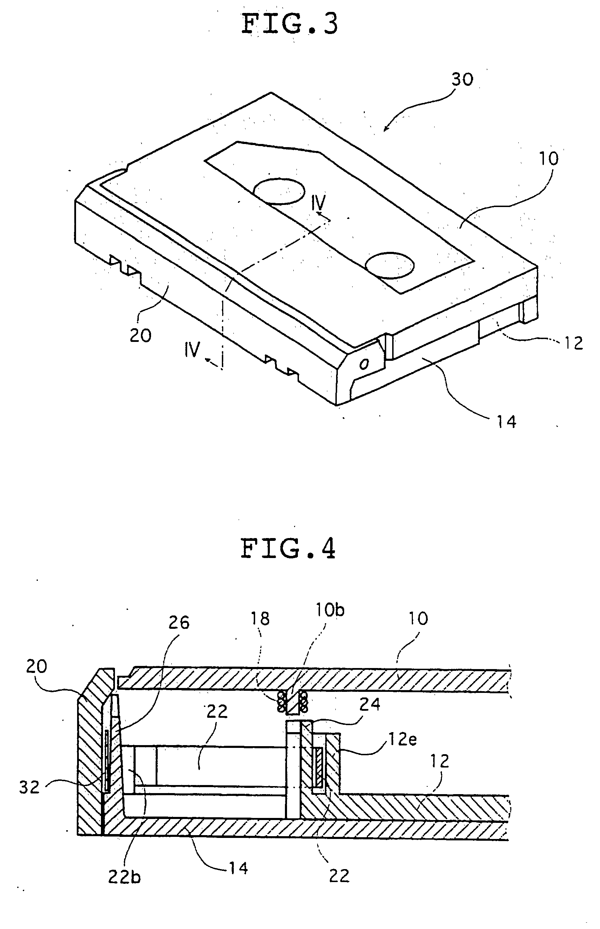

Fig. 3 shows a magnetic tape cassette 30 (cassette body) formed by coupling the upper half 10, the lower half 12 and the like of Fig. 1. Fig. 4 is a side elevational cross-sectional view showing the magnetic tape cassette 30 taken along the line IV-IV. In Fig. 4, some parts are omitted for explanation. Reference numeral 32 denotes a cross-section of the magnetic tape.

As described above, in the present embodiment, since the wall-like rib 26 provided on the slider 14 is higher than the tape guides 12d, it is possible to prevent the magnetic tape 32 from riding over the rib 26 and being displaced inside.

Furthermore, at this time, since the rigidity is ensured by abutting the ribs 10c and 10c provided on the upper half 10 against the wall-like member 12e of the lower half 12 and the conventional triangular plate member projecting forwardly is dispensed with, even if the height of the wall-like rib 26 of the slider 14 exceeds the height of the tape guides 12d, it is possible to move the slider 14 sufficiently rearwardly and also to keep a wide space for the insertion of the guides or the like.

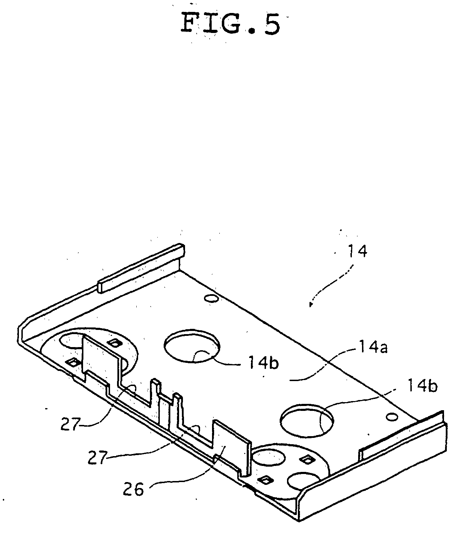

Also, as shown in Fig. 1, the wall-like rib 26 of the slider 14 is not limited to a continuous shape and its overall shape is not limited to the shape whose height exceeds the height of the tape guides 12d. It is possible to exhibit the effect of preventing the magnetic tape 32 from being displaced inside, even with the wall-like rib only a part of which is made higher than the tape guides 12d, namely, as shown in Fig. 5, with the wall-like rib 26 which has cutaway portions 27 on both sides close to the central portion and has a height higher than that of the tape guides 12d on the side adjacent to the pair of tape guides 12d and 12d. Also, in the present embodiment, the biasing means for biasing the slider 14 forward has been described with respect to the means provided with the leaf spring 22. The biasing means is not limited to the leaf spring.

The magnetic tape cassette according to the present invention has been described in detail. Of course, the present invention is not limited to the examples described above, and it is possible to effect a variety of improvements or modifications without departing from a scope of the essence of the present invention as defined in the appended claims.

### INDUSTRIAL APPLICABILITY

In the magnetic tape cassette according to the present invention, since at least part of the wall-like rib provided on the slider to face the back side of the magnetic tape exposed on the front face side of the cassette is higher than the tape guides, it is possible to prevent the magnetic tape from riding over the above-described wall-like rib and being displaced inside, i.e., from entering on the rear side of the rib of the slider.

Accordingly, with magnetic tape cassette according to the present invention, it is possible to avoid hindrance or obstruction caused by the entrainment of the magnetic tape inside of the case.

## Claims

1. A magnetic tape cassette (30) comprising:
an upper half (10) and a lower half (12) constituting a cassette body for accomodating a pair of take-up hubs around which a magnetic tape (32) is wound, said upper (10) and lower (12)halves being coupled with each other in a lid alignment manner so that only a part of the magnetic tape (32) tensioned between said pair of take-up hubs is exposed;
a pair of tape guides (12d) protruding vertically on a bottom surface (12a) on both right and left front ends of said lower half (12) for guiding the part of the magnetic tape (32) tensioned between said pair of take-up hubs to a front face of said cassette body;
a slider (14) in which a rib (26) is formed in an upright manner on a front side which is on the back surface side of the part of the magnetic tape exposed from said cassette body between said pair of tape guides (12d) said slider (14) being mounted on an outer lower surface of said lower half (12) to be slidable between a position where the slider (14) covers the space on the back surface side of the magnetic tape (32) and a position where the slider opens the space; and
a front lid (20) covering the front face of said cassette body from the front face side of the magnetic tape (32) tensioned between said pair of tape guides (12d) and supported at its back surface side by the rib (26) provided in an upright manner on said slider (14),
**characterized in that** a height of at least a part of said rib (26) is set to be higher than a height of said tape guides (12d) whereby the magnetic tape (32) is prevented from riding over said rib (26) and being displaced on the rear side.

2. The magnetic tape cassette (30) as defined in claim 1, wherein said rib (26) has a height that is set to be higher than the height of said tape guides (12d) on each side at least adjacent to said pair of tape guides at both front ends of said lower half.

3. The magnetic tape cassette (30) as defined in claim 1, wherein said rib (26) is provided substantially in the entire range on each side adjacent to said pair of tape guides (12d) at both front ends of said lower half.

4. The magnetic tape cassette (30) as defined in claim 1, wherein said rib (26) has cutaway portions on both sides of its central portion, and has a height that is set to be higher than the height of said tape guides (12d) on each side at least adjacent to said pair of tape guides.

5. The magnetic tape cassette (30) as defined in claim 1, wherein a wall-like member (12e) in the form of a V-shape is provided in an upright manner along an outer circumference of the magnetic tape (32) wound around said pair of take-up hubs on a front side of a bottom surface of said lower half (12) and has its upper portion opened.

6. The magnetic tape cassette (30) as defined in claim 5, wherein a rib (10c) curved so as to come into contact with said wall-like member (12e) when the cassette is assembled is provided on the bottom surface of said upper half (10) corresponding to said wall-like member (12e) in the form of the V-shape provided on the bottom surface of said lower half (12).

## Patentansprüche

1. Magnetbandkassette (30) mit:
einer oberen Hälfte (10) und einer unteren Hälfte (12), die einen Kassettenkörper bildet zum Aufnehmen eines Paares von Aufnahmenaben, um die ein Magnetband (32) gewunden ist, wobei die obere (10) und untere Hälfte (12) miteinander in einer Dekkel- Ausrichtungsweise gekuppelt sind, so daß nur ein Teil des zwischen dem Paar von Aufnahmenaben gespannten Magnetbandes (32) freiliegend ist;
einem Paar von Bandführungen (12d), die vertikal auf einer Bodenoberfläche (12a) auf sowohl dem rechten als auch dem linken vordere Enden der unteren Hälfte (12) hervorstehend, zum Führen des Teiles des zwischen dem Paar von Aufnahmenaben gespannten Magnetbandes (32) zu einer Vorderfläche des Kassettenkörpers;
einem Schieber (14), in dem eine Rippe (26) in einer aufrechten Weise an einer Vorderseite gebildet ist, die an der hinteren Oberflächenseite des Teiles des von dem Kassettenkörper freiliegenden Magnetbandes zwischen dem Paar von Bandführungen (12d) ist, wobei der Schieber (14) auf einer äußeren unteren Oberfläche des unteren Hälfte (12) montiert ist, um verschiebbar zu sein zwischen einer Position, wo der Schieber (14) den Raum an der hinteren Oberflächenseite des Magnetbandes (32) abdeckt und einer Position, wo der Schieber den Raum öffnet; und
einem vorderen Deckel (20), der die Vorderfläche des Kassettenkörpers von der Vorderflächenseite des Magnetbandes (32), gespannt zwischen dem Paar von Bandführungen (12d) und gelagert an seiner hinteren Oberflächenseite durch die Rippe (26), vorgesehen in einer aufrechten Weise auf dem Schieber (14), abdeckt,
**dadurch gekennzeichnet, daß**
eine Höhe von zumindest einem Teil der Rippe (26) festgelegt wird höher zu sein als eine Höhe der Bandführungen (12), wodurch das Magnetband (32) am Überspringen über die Rippe (26) und Verlagem an die Rückseite gehindert wird.

2. Magnetbandkassette (30), nach Anspruch 1, wobei die Rippe (26) eine Höhe hat, die festgelegt ist höher als die Höhe der Bandführungen (12) zu sein, auf jeder Seite zumindest benachbart zu dem Paar von Bandführungen an beiden vorderen Enden der unteren Hälfte.

3. Magnetbandkassette (30), nach Anspruch 1, wobei die Rippe (26) im wesentlichen im gesamten Bereich auf jeder Seite benachbart zu dem Paar von Bandführungen (12) an beiden vorderen Enden der unteren Hälfte vorgesehen ist.

4. Magnetbandkassette (30), nach Anspruch 1, wobei die Rippe (26) weggeschnittene Abschnitte an beiden Seiten ihres zentralen Abschnittes hat, und eine Höhe hat, die höher festgesetzt ist als die Höhe der Bandführungen (12) auf jeder Seite zumindest benachbart dem Paar von Bandführungen.

5. Magnetbandkassette (30), nach Anspruch 1, wobei ein wandartiges Teil (12e) in der Form einer V- Form in einer aufrechten Weise entlang eines Außenumfanges des Magnetbandes (32) vorgesehen ist, das um das Paar von Aufnahmenaben an einer Vorderseite einer Bodenoberfläche der unteren Hälfte (12) gewickelt ist, und seinen oberen Abschnitt geöffnet hat.

6. Magnetbandkassette (30), nach Anspruch 5, wobei eine Rippe (10c), die so gekrümmt ist, um in Kontakt mit dem wandartigen Teil (12e) zu kommen, wenn die Kassette zusammengesetzt ist, auf der Bodenoberfläche der oberen Hälfte (10) vorgesehen ist, die dem wandartigen Teil (12e) in der Form der V- Form, vorgesehen auf der Bodenoberfläche der unteren Hälfte (12), entspricht.

## Revendications

1. Cassette à bande magnétique (30) comportant :
une moitié supérieure (10) et une moitié inférieure (12) constituant un corps de cassette destiné à recevoir une paire de moyeux de réception autour desquels est enroulée une bande magnétique (32), lesdites moitiés supérieure (10) et inférieure (12) étant reliées l'une à l'autre avec alignement de volet de telle sorte que seule une partie de la bande magnétique (32) tendue entre ladite paire de moyeux de réception est exposée;
une paire de guides de bande (12d) qui dépasse verticalement sur une surface inférieure (12a) sur les deux extrémités droite et gauche de ladite moitié inférieure (12) afin de guider la partie de la bande magnétique (32) tendue entre ladite paire de moyeux de réception vers une face avant dudit corps de cassette;
un élément coulissant (14) dans lequel une nervure (26) est formée d'une manière verticale sur un côté avant qui est sur le côté de surface arrière de la partie de la bande magnétique exposée depuis ledit corps de cassette entre ladite paire de guides de bande (12d), ledit élément coulissant (14) étant monté sur une surface inférieure extérieure de ladite moitié inférieure (12) afin de pouvoir coulisser entre une position où l'élément coulissant (14) recouvre l'espace sur le côté de surface arrière de la bande magnétique (32) et une position où l'élément coulissant ouvre l'espace; et
un volet avant (20) qui recouvre la face avant dudit corps de cassette depuis le côté de face avant de la bande magnétique (32) tendue entre ladite paire de guides de bande (12d) et supporté au niveau de son côté de surface arrière par la nervure (26) prévue d'une manière verticale sur ledit élément coulissant (14),
**caractérisée en ce qu'**une hauteur d'au moins une partie de ladite nervure (26) est établie afin d'être plus grande qu'une hauteur desdits guides de bande (12d) de telle sorte que la bande magnétique (32) est empêchée de passer par-dessus ladite nervure (26) et d'être déplacée sur le côté arrière.

2. Cassette à bande magnétique (30) selon la revendication 1, dans laquelle ladite nervure (26) a une hauteur qui est établie afin d'être plus grande que la hauteur desdits guides de bande (12d) de chaque côté au moins adjacent à ladite paire de guides de bande au niveau des deux extrémités avant de ladite moitié inférieure.

3. Cassette à bande magnétique (30) selon la revendication 1, dans laquelle ladite nervure (26) est prévue sensiblement sur toute l'étendue sur chaque côté adjacent à ladite paire de guides de bande (12d) au niveau des deux extrémités avant de ladite moitié inférieure.

4. Cassette à bande magnétique (30) selon la revendication 1, dans laquelle ladite nervure (26) a des parties découpées des deux côtés de sa partie centrale, et a une hauteur qui est établie afin d'être plus grande que la hauteur desdits guides de bande (12d) de chaque côté au moins adjacent à ladite paire de guides de bande.

5. Cassette à bande magnétique (30) selon la revendication 1, dans laquelle un élément en forme de paroi (12e) d'une forme en V est prévu d'une manière verticale le long d'une circonférence extérieure de la bande magnétique (32) enroulée autour de ladite paire de moyeux de réception sur un côté avant d'une surface inférieure de ladite moitié inférieure (12) et a sa partie supérieure ouverte.

6. Cassette à bande magnétique (30) selon la revendication 5, dans laquelle une nervure (10c) courbée de façon à venir en contact avec ledit élément en forme de paroi (12e) lorsque la cassette est assemblée est prévue sur la surface inférieure de ladite moitié supérieure (10) correspondant audit élément en forme de paroi (12e) en forme de V prévu sur la surface inférieure de ladite moitié inférieure (12).
